Europäisches Patentamt

European Patent Office

Office européen des brevets

(11) Publication number: **0 231 535**
**B1**

# (12) EUROPEAN PATENT SPECIFICATION

(45) Date of publication of patent specification: **02.01.91**

(21) Application number: **86202000.5**

(22) Date of filing: **14.11.86**

(51) Int. Cl.⁵: **B 01 D 50/00**

(54) **Device with cyclone to cool fumes.**

(30) Priority: **19.12.85 IT 6051085 u**

(43) Date of publication of application:
**12.08.87 Bulletin 87/33**

(45) Publication of the grant of the patent:
**02.01.91 Bulletin 91/01**

(84) Designated Contracting States:
**AT BE CH DE ES FR GB GR LI LU NL SE**

(56) References cited:
**DE-A-1 920 563**
**DE-C- 866 898**
**US-A-4 445 912**

(73) Proprietor: **DANECO DANIELI ECOLOGIA SpA**
**Via Nazionale 85 - SS. 56**
**I-33048 San Giovanni al Natisone (UD) (IT)**

(72) Inventor: **Castelli, Luigi**
**Via Palestrina 1**
**I-34100 Trieste (IT)**
Inventor: **Di Benedetto, Paolo**
**Via Siracusa 26/1**
**I-33100 Udine (IT)**

(74) Representative: **Petraz, Gilberto Luigi**
**G.L.P. S.a.S. di Gilberto Petraz P.le Cavedalis 6/2**
**I-33100 Udine (IT)**

Courier Press, Leamington Spa, England.

## Description

This invention concerns a device to cool fumes which is employed to cool hot fumes, mixed with dust, leaving a casting furnace, for instance, or any other source of dirty fumes having a high or very high temperature. The invention concerns in particular a device to cool fumes which is able to cooperate with filter elements and is improved by the application of a cyclone.

The systems now known for cooling fumes leaving at a high or very high temperature or including particles in suspension are very many in number.

We shall overlook the tower-type or rain-type systems since the present invention concerns expressly the devices to cool fumes in which a current of water or air laps a heat exchanger and cools the fumes passing through.

The currently known cooling devices of the type covered by the present invention include an inlet manifold, a set of cooling units and an outlet manifold, which is connected pneumatically to filter elements, for example, of a filter sack type.

In the known cooling devices such filter elements are often lapped by particles which may be at a high temperature or even be glowing with heat. In fact, this situation creates problems as regards the preservation of the sacks and the cleaning of the ducts.

Indeed, such particles tend to stick to the walls of the ducts and to build up progressively, thus blocking the section of the ducts and increasing the losses of load.

Such known systems entail many drawbacks, such as fragment damage to the filter elements in that the heavy and glowing particles tend to make holes in the filters, which normally consist of a plastic such as polyester polyacrylonitrile.

Moreover, the heavy particles tend to clog the ducts and necessitate frequent cleaning operations to prevent the losses of load reaching unacceptable values.

Furthermore, owing to the tendency of the particles to stick to the walls of the ducts, the heat exchange between the fumes, the walls of the ducts and the air or water tends to drop quickly to unacceptable values.

DE—C—866.898 shows a cyclone which purifies the fumes before sending them to a cooling assembly, the impurities and fumes being then purified again by a second cyclone.

Thus teaching entails the occupation of large spaces and heavy production, for installation and maintenance costs.

It also entails problems regarding the transfer of the impurities from the first cyclone to the inlet of the second cyclone without also transferring fumes which are too hot.

To obviate all these drawbacks and obtain a plurality of advantages, the present applicant has designed, tested and embodied the present invention.

The invention is embodied in a device as claimed in the appended claim.

This device enables the heavy and possibly glowing particles to settle on entry into the device and causes only the fume component or micron-sized component of the fumes to pass along the nest of ducts.

The conformation and size of the cyclone are designed to suit the composition of the fumes so as to obtain the required degree of separation of the components of the fumes in the cyclone.

The cyclone has at its lower end a suitable discharge valve, which may be rotary, single or double, but will advantageously be rotary or double when it is desired to discharge the settled particles without interrupting the working cycle.

On entering the cyclone, the fumes are set in rotation before entering the cooling nests of ducts, so that the particles are centrifuged onto the periphery of the cylone and thus tend to drop, whereas the fumes in the centre of the cyclone tend to leave at the top of the same.

The fumes pass through the cooling units and depart to the fume outlet manifold, where they are passed through the filter elements for a suitable final filtration.

In this way a prior separation of the fumes according to the size of the cyclone is obtained so that the fumes reaching the filter elements contain only particles in suspension which are of a well determined size. Such particles will therefore not tend to stick to the inside of the nests of ducts and will not possess enough dynamic force to make holes in the filter diaphragms.

Furthermore, even when such particles are entrained by the fumes and are still glowing when they reach the beginning of the cooling units, they become quickly extinguished and do not complete a mass sufficient to maintain their temperature over a long extent.

The invention is therefore embodied with a device for cooling hot, dusty fumes comprising a cyclone and a heat exchanger which is cooled by forced draught or by water and which consists of at least one cooling unit, an upstream inlet manifold and a downstream outlet manifold, the outlet manifold being connected to downstream filter elements, the device being characterised in that, the heat exchanger inlet manifold also forms a tangential inlet to the cyclone which is located beneath the heat exchanger and which is provided with a discharge valve at the bottom of its conical chamber.

Let us now see a preferred embodiment of the invention with the help of the attached figures, which are given as a non-restrictive example as follows:

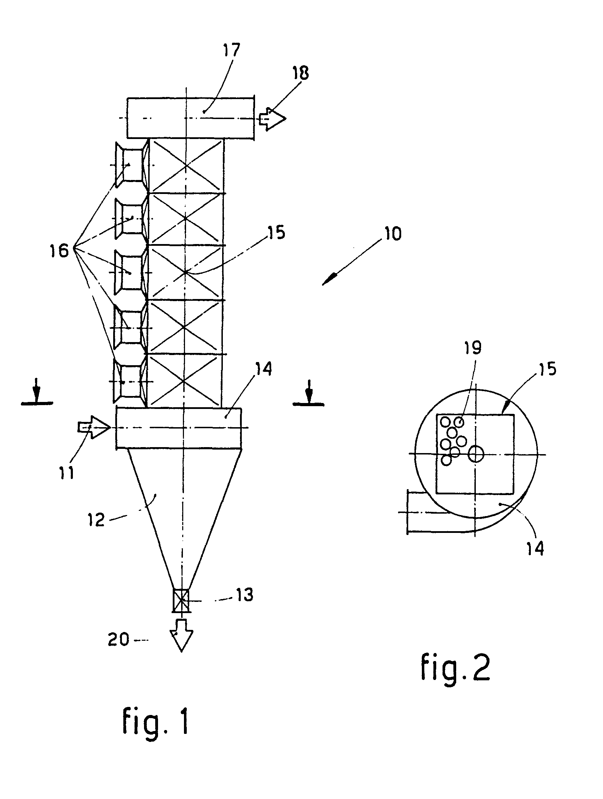

Fig. 1 shows a vertical view of a device to cool fumes according to the invention;

Fig. 2 shows a preferred axial section.

In the figures a cooling device 10 comprises an inlet 11 for fumes cooperating with an inlet manifold 14, which tends to set the fumes in rotation within such manifold itself.

A cone 12 is located below the inlet manifold 14 and constitutes therewith a cyclone, which has at its lower end a valve 13 for discharge 20 of any particles which may build up within the cyclone 12 above the valve 13.

One or more cooling units 15 are included in cooperation with the inlet manifold 14 and may consist of a nest of ducts 19 or be of any other type.

The cooling units 15 may be cooled by forced circulation of water or forced draught.

Fans 16 are provided in the example shown and create a forced draught for cooling purposes.

An outlet manifold 17 with an outer 18 for fumes is comprised above the cooling units 15. Such outlet 18 cooperates with filter elements, which are not shown in the figures.

Likewise, the inlet 11 for fumes cooperates with a fume ejector, which is not shown in the figures.

## Claim

Device for cooling hot, dusty fumes comprising a cyclone (12) and a heat exchanger which is cooled by forced draught (16) or water and which consists of at least one cooling unit (15), an upstream inlet manifold (14) and a downstream outlet manifold (17), the outlet manifold (17) being connected to downstream filter elements: characterised in that, the heat exchanger inlet manifold (14) also forms a tangential inlet to the cyclone (12) which is located beneath the heat exchanger and which is provided with a discharge valve (13) at the bottom of its conical chamber.

## Patentanspruch

Einrichtung zum Kühlen heißer, staubiger Abgase, mit einem Zylkon (12) und mit einem Wärmetauscher, der durch Fremdbelüftung oder durch Wasser gekühlt wird und der aus zumindest einer Kühleinheit (15), einem stromauf gelegenen Einlaßverteiler (14) und einem stromab gelegenen Auslaßverteiler (17) besteht, wobei der Auslaßverteiler (17) an stromab gelegne Filterelemente angeschlossen ist, dadurch gekennzeichnet, daß der Wärmetauscher-Einlaßverteiler (14) auch einen tangentialen Einlaß für den Zyklon (12) bildet, der unterhalb des Wärmetauschers gelegen und am Boden seiner konischen Kammer mit einem Entleerungsventil (13) versehen ist.

## Revendication

Dispositif pour refroidir les fumées chaudes et chargées de poussière, comprenant un cyclone (12) et un échangeur thermique qui est refroidi par ventilation forcèe ou par eau et qui est constitué d'au moins un groupe de refroidissement (15), d'un collecteur d'entrée en amont (14) et d'un collecteur de sortie en aval (17), le collecteur de sortie (17) étant raccordé aux éléments filtrants en aval, ledit dispositif étant caractérisé en ce que le collecteur d'entrée de l'échangeur thermique (14) forme également un accès tangentiel au cyclone (12), qui est situé au-dessous de l'échangeur thermique et qui est pourvu d'une soupape d'évacuation (13) au fond de sa chambre conique.

fig. 1

fig. 2